Europäisches Patentamt

European Patent Office

Office européen des brevets

(19)

(11) Numéro de publication: **0 042 023**
**B1**

(12) **FASCICULE DE BREVET EUROPEEN**

(45) Date de publication du fascicule du brevet: **28.09.83**

(51) Int. Cl.³: **G 02 C 7/04**

(21) Numéro de dépôt: **80810194.3**

(22) Date de dépôt: **12.06.80**

(54) Lentille de contact à correction optique axée.

(43) Date de publication de la demande:
**23.12.81 Bulletin 81/51**

(45) Mention de la délivrance du brevet:
**28.09.83 Bulletin 83/39**

(84) Etats contractants désignés:
**AT BE CH DE FR GB IT LI LU NL SE**

(56) Documents cités:
**EP - A - 0 008 726**
**DE - A - 2 046 389**

(73) Titulaire: **BIOLENS SA**
**4, Place St-François**
**CH-1002 Lausanne (CH)**

(72) Inventeur: **Muller, Gérard**
**Route de Blonay 28**
**CH-1800 Vevey (CH)**

(74) Mandataire: **Seehof, Michel et al,**
**c/o AMMANN INGENIEURS-CONSEILS EN**
**PROPRIETE INTELLECTUELLE SA BERNE**
**Schwarztorstrasse 31**
**CH-3001 Berne (CH)**

Lentille de contact à correction optique axée

Les lentilles de contact destinée à corriger les défauts de vision d'un individu sont constituées d'une portion centrale appelée zone optique et d'une portion périphérique destinée à l'appui de la lentille.

Les lentilles de contact sont toutes en mouvement sur l'oeil, ce mouvement étant de type linéaire ou ve type rotatif.

Les corrections optiques sphériques ne sont pas influencées par les mouvements, par contre, toutes les autres formes de correction, de type astigmate, prismatique, biet multifocale sont des corrections axées pour lesquelles toute rotation doit être évitée.

Les moyens connus pour stabiliser ces dernières sont de deux types, cependant semblables en ce qu'ils sont basés sur la taille en forme de prisme de la lentille.

Dans le premier cas il s'agit d'une taille monoprismatique avec l'épaisseur maximale au bord inférieur. Le poids de ce bord, ainsi augmenté, fait basculer, par oscillations successives, la lentille dans la position souhaitée. Quelquefois, le bord inférieur est tronqué pour augmenter la stabilisation recherchée.

Dans le deuxième cas il s'agit d'une taille biprismatique avec l'épaisseur maximale située sur l'axe horizontal de la lentille. La stabilisation est obtenue par pression des paupières sur deux plans inclinés.

Dans les deux cas la lentille devient épaisse à l'exception du bord supérieur dans le premier cas et des deux bords supérieur et inférieur dans le deuxième cas.

La présente invention a pour but de remédier à ces inconvénients et de permettre une parfaite stabilisation pour des lentilles de contact de toute nature, tout en maintenant une minceur minimum.

Le but est atteint par une lentille décrite dans les revendications.

L'invention sera expliquée en détail en se référant au dessin ci-annexé présentant á titre d'exemple une forme d'exécution de l'objet de l'invention.

La figure 1 représente une vue de dessus d'une lentille de contact selon l'invention,

la figure 2 représente une coupe horizontale de la lentille de contact de la figure 1, et

la figure 3 représente une couple verticale de la lentille de contact de la figure 1.

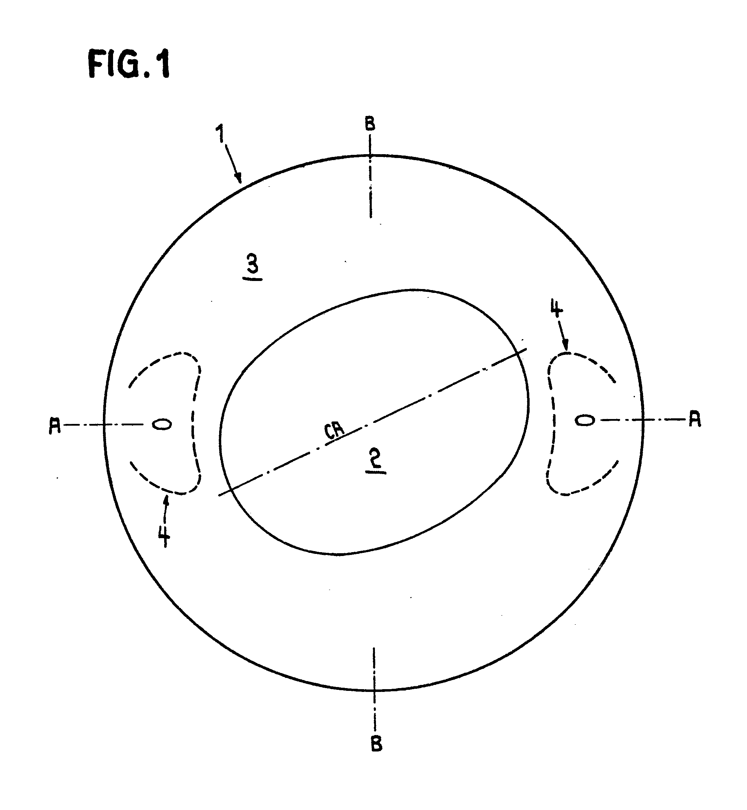

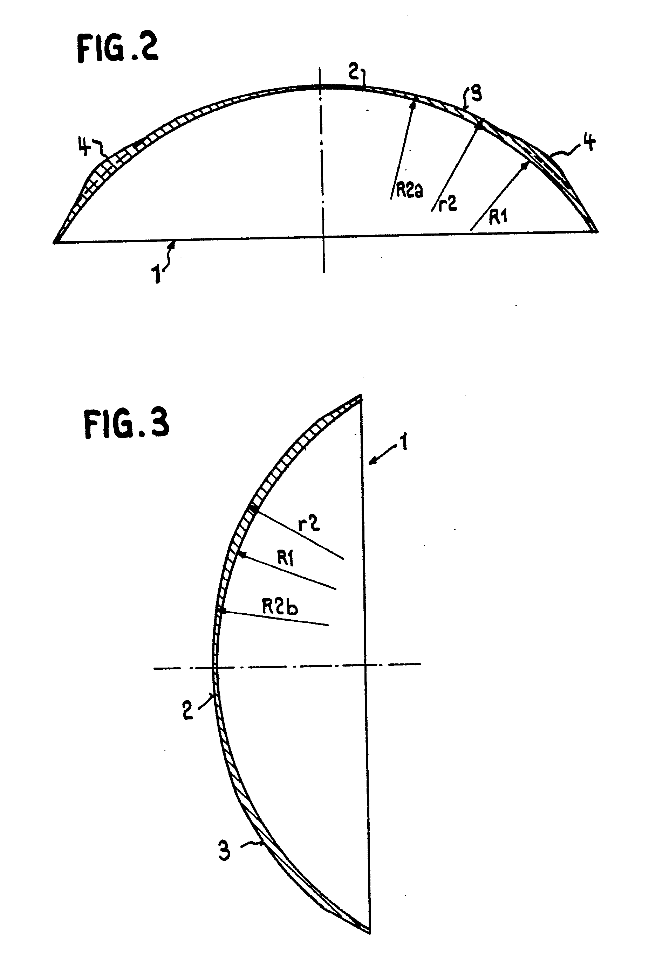

On reconnaît sur la figure 1 la pentille de contact 1 avec sa zone optique 2, sa zone périphérique 3 et son axe de correction CA. Sur l'axe de stabilisation AA horizontal se trouvent, des deux côtés par rapport à la zone optique, deux bossages 4 dans la zone périphérique qui assurent une excellente stabilisation de la lentille. Chaque bossage a de préférence une épaisseur de 0,1 à 0,2 mm et peut être de forme circulaire ou en coussin ou peut avoir toute autre forme, mais il est important, que ce bossage ait une forme arrondie, qui puisse s'appuyer sur le bord de la paupière sand provoquer d'irritation. Il s'agit dans ce cas particulier d'une correction axée astigmate, dont l'axe de correction est indépendant de l'axe de stabilisation. La détermination de l'angle formé par l'axe de correction et l'axe de stabilisation est le fait de l'adaptateur. On reconnaît sur la figure 2 la courbure interne de rayon R1, la courbure externe de la zone périphérique de rayon r2 et la courbure externe horizontale de la zone optique de R2a et sur la figure 3 outre les valeurs R1 et r2, le rayon R2b de la courbure externe verticale de la zone optique.

Les bossages peuvent être produits par tournage, fraisage, éventuellement polimérisation en sours de fabrication de la lentille. L'on peut prévoir un un pousieurs bossages sur la zone périphérique et plus particulièrement dans l'espace interpalpébrale de celle-ci, lorsque la lentille est en place sur l'oeil.

Chaque battement de paupière contribue à maintenir la lentille parfaitement axée. Le nombre et l'emplacement des bossages stabilisateurs sont déterminés par la morphologie palpébrale et le type de correction. On peut donner comme règle que dans la majorité des cas 2 stabilisateurs, disposés selon la figure 1, sont nécessaires et suffisants, mais il n'est pas indispensable que le centre du bossage soit disposé sur l'axe de stabilisation.

Dans le cas de correction multifocale on peut être amené à introduire un troisième stabilisateur sur l'axe verticale.

Dans le cas d'une ouverture palpébrale très large on peut remplacer chaque stabilisateur de la figure 1 par 2 stabilisateurs verticaux, disposés symétriquement par rapport, à l'axe de stabilisation.

Il est clair que ces stabilisateurs en forme de bossage ne sont pas seulement prévus pour ce type de lentilles toriques hydrophiles souples très minces, mais également appliquables à tous les autres types de lentilles de contact quels que soient les matériaux dont elles sont faites.

**Revendications**

1. Lentille de contact à correction optique axée, comprenant une zone optique et une zone périphérique, caractérisée en ce qu'elle comporte dans sa zone périphérique (3) au moins un bossage (4), placé sur l'axe de stabilisation (AA) horizontal de la lentille (1) ou bien plusieurs bossages placés synthétiquement par rapport à cet axe.

2. Lentille selon la revendication 1, caractérisée en ce qu'elle comporte deux bossages dont le centre est placé sur l'axe de stabilisation (AA) horizontal de la lentille, de part et d'autre de la zone optique (2).

3. Lentille selon la revendication 1, caractérisée en ce qu'elle comporte deux paires de bossages, chaque paire étant placée de part et d'autre de la zone optique (2) et les deux bossages d'une paire étant disposés symétriquement par rapport à l'axe de stabilisation (AA), horizontal de la lentille.

4. Lentille selon l'une quelconque des revendications 1 à 3, caractérisée en ce qu'elle comprend encore un stabilisateur placé sur l'axe vertical (BB) de la lentille (1).

5. Lentille selon l'une quelconque des revendications 1 à 4, caractérisée en ce que la hauteur d'un bossage est comprise entre 0,1 et 0,2 mm.

**Patentansprüche**

1. Kontaktlinse für gerichtete optische Korrektur, mit einer optischen Zone und einer Randzone, dadurch gekennzeichnet, dass sie in ihrer Randzone (3) mindestens eine Erhebung (4), die sich auf der horizontalen Stabilisierungsachse (AA) der Linse (1) befindet, oder mehrere Erhebungen, die sich symmetrisch bezüglich dieser Achse befinden, aufweist.

2. Linse nach Anspruch 1, dadurch gekennzeichnet, dass sie zwei Erhebungen aufweist, deren Mitte sich beidseitig der optischen Zone (2) auf der horizontalen Stabilisierungsachse (AA) befindet.

3. Linse nach Anspruch 1, dadurch gekennzeichnet, dass sie zwei Paare Erhebungen aufweist, wobei jedes Paar beidseitig der optische Zone (2) angeordnet ist und die beiden Erhebungen eines Paares symmetrisch bezüglich der horizontalen Stabilisierungsachse (AA) angeordnet sind.

4. Linse nach einem der Ansprüche 1 bis 3, dadurch gekennzeichnet, dass sie noch einem auf der vertikalen Achse (BB) der Linse (1) angeordneten Stabilisator aufweist.

5. Linse nach einem der Ansprüche 1 bis 4, dadurch gekennzeichnet, dass die Höhe einer Erhebung zwischen 0,1 und 0,2 mm beträgt.

**Claims**

1. Contact lens for oriented optical correction, comprising an optical zone and a peripheric zone, caracterized in that the lens comprises in its peripheric zone (3) at least one boss (4) disposed on the horizontal axis of stabilization (AA) of the lens (1), or several bosses disposed symmetrically to this axis.

2. Lens according to Claim 1, characterized in that the lens comprises two bosses which center is disposed on the horizontal axis of stabilization (AA) of the lens, there and here of the optical zone (2).

3. Lens according to Claim 1, characterized in that it comprises two pairs of bosses, each pair being disposed there and here of the optical zone (2) and the two bosses of a pair being disposed symmetrically to the horizontal axis of stabilization (AA) of the lens.

4. Lens according to any one of the Claims 1 to 3, characterized in that the lens comprises further a stabilizer disposed on the vertical axis (BB) of the lens (1).

5. Lens according to any one of the Claims 1 to 4, characterized in that the height of a boss is comprised between 0,1 and 0,2 mm.

# FIG.1

FIG.2

FIG.3